# EUROPEAN PATENT SPECIFICATION

(11) **EP 2 204 115 B1**
(45) Date of publication and mention of the grant of the patent: **24.08.2011**
(21) Application number: 09179434.7
(22) Date of filing: 16.12.2009
(51) Int. Cl.: A47J 37/07

(54) **Device and method for the outdoor preparation of food**
Vorrichtung und Verfahren zum Bereiten von Nahrunsmitteln im Freien
Dispositif et procedé pour la préparation d'aliments en plein air

(30) Priority: 05.01.2009 NL 2002395
(43) Date of publication of application: 07.07.2010
(73) Proprietor: Mutsaers, Franciscus Norbertus Antonius, 5061 CZ Oisterwijk (NL)
(72) Inventor: Mutsaers, Franciscus Norbertus Antonius, 5061 CZ Oisterwijk (NL)
(74) Representative: Smeets, Eugenius Theodorus J. M.

(56) References cited:
- EP-A- 0 626 055
- FR-A- 2 494 976
- FR-A- 2 819 708
- US-A- 3 791 370
- US-A1- 2002 017 290
- US-A1- 2005 039 612

## Description

### BACKGROUND OF THE INVENTION

The invention relates to a device for the outdoor preparation of food by heating, comprising a movable frame with a combustion chamber arranged therein, which chamber is provided with an air inlet and is connected to an outlet for combustion gases adjacent an upper side of the device, and comprising a plateau which is located above the combustion chamber and on which food to be prepared can be placed. The invention also relates to a method for the outdoor preparation of food by heating.

Such a device is commonly called a barbecue and the method is called barbecuing, but these expressions are too limited to do justice to the present invention. Thus the device can be operated on various fuels, such as gaseous, liquid, and solid fuels. Examples of the latter type are coal, wood, and charcoal. It is noted that, although less obvious, such a device may also be operated with electrically generated heat. In that case the expression 'combustion chamber' should read 'heating chamber' and the expression 'combustion gases' should read 'hot air'.

Such a device should be suitable for various users with various wishes, i.e. the user himself can decide what kind of food he wishes to prepare by heating. The device should furthermore have a good safety such that a user, in particular a youthful person or a child, is not exposed to unacceptable risks. The device should also be compact and comparatively light in weight, so that it can be easily moved to various locations outdoors such as in the garden, on the terrace, and under a veranda.

Such a device is known from the American patent US 2,894,448 published on July 14th, 1959. This discloses (cf. Fig. 2 of the cited patent) a substantially cylindrical device that comprises a cooking appliance that is suitable for preparing various kinds of food by heating. Smoking of fish or meat is also mentioned as a possible application. The device comprises a plateau on which food to be prepared can be placed, and there are projections at three different distances from the combustion chamber: immediately above it, approximately at the upper side of the device, and in an intermediate position. Roughly in this intermediate position it is possible to insert a removable attachment that acts as a drain for fat dripping from the food located on the plateau in the uppermost position. The plateau in this case comprises a grill through which fat from the food under preparation can drop down.

It is a disadvantage of the known device that it is comparatively unwieldy in use. The device is not suitable for the preparation of all kinds of food. Neither is the safety as good as it could be.

Another prior art device and method for the outdoor preparation of food by heating is described in document US 2002/0017290A1.

### SUMMARY OF THE INVENTION

It is accordingly an object of the present invention to provide a device as described above that is comparatively easy to use, that is suitable for preparing many kinds of food products, and that has an excellent safety.

According to the invention, a device of the kind mentioned in the opening paragraph is for this purpose characterized in that the device comprises a further plateau on which further food to be prepared can be placed and which is located between the combustion chamber and the plateau, and in that the device is provided with heat distribution means for distributing the heat generated in the combustion chamber over the plateau and the further plateau and in that the heat distribution means comprise that the further plateau forms part of a bottom of a drawer-type body of which an open front adjoins a portion of a front face of the device that can be opened, of which two side faces are at some distance from the side walls, and of which a rear face is at some distance from the rear wall of the device, wherein the side faces, the rear face, as well as the front face are bounded on the upper side by the plateau.

The invention is based on the following two surprising recognitions. First, two fixed positions for the preparation of food, one close to the combustion chamber and one approximately at the upper level of the device, have the result that a large number of different food products can be prepared simultaneously. The provision of heat distribution means achieves that the temperature distribution of the two plateaus is suitable for the preparation of the envisaged foods. Thus it is possible on the upper plateau to prepare meat, fish, vegetables, and pancakes at a temperature that lies between approximately 100 °C and 200 °C. On the lower plateau situated closest to the combustion chamber, at a temperature that lies between approximately 200 °C and 300 °C, it is possible to prepare dough products such as pizzas. The latter is particularly remarkable because the preparation of pizzas is highly critical. On the one hand the bottom should be nicely browned and crunchy, while on the other hand the top of a pizza should be exactly done and chewy. Products such as vegetables, meat, fish, and cheese present on such a pizza are very critical in this respect, in particular the cheese. Where a barbecue is mainly designed for preparing meat products, the preparation of pizzas forms a welcome addition to the barbecue menu. This is particularly relevant in the case of children, who are often very fond of pizzas. The wider possibilities may also be attractive for adults, however, for example for vegetarians.

In this manner it is possible in particular to optimize the temperature and the temperature distribution in the heating chamber above the further plateau for the preparation of pizzas. An important additional advantage of the device according to the invention is that flames and combustion gases can never leave the device in principle. This is because the lower plateau in particular will preferably be formed by a closed plate. Sudden flames and/or combustion gases will then never come into direct contact with a user of the device even if the upper plateau is formed as an open barbecue grill. Such flames and gases will normally leave the device through an exhaust pipe that is preferably fitted to the gas outlet. A device according to the invention is thus not only very effective, but also very safe to use.

For this purpose, the device will be provided with suitable sealing means, for example in the form of a heat-resistant cement, between the drawer-type body and the other parts of the device, among these in particular the gas channels on either side of and behind the combustion chamber formed by the drawer-type body.

In a preferred embodiment, the heat distribution means comprise that the bottom of the further plateau is double-walled. It is achieved thereby that the bottom of a pizza does not become too hot, so that burning thereof can be avoided. The heat not supplied directly to the pizza may be distributed through the device in a different manner so as to realize an optimum temperature distribution over the two plateaus. It is noted in this connection that the expression 'heat distribution' herein denotes the spreading and dividing of heat in all three forms in which this is known, and which are also prevalent in a barbecue: firstly radiation of heat, secondly conduction of heat, and thirdly convection of heat.

Preferably, the bottom of the further plateau has a shape that projects in its center towards the combustion chamber, viewed in a cross-section taken perpendicularly to a projected direction from the air inlet to the outlet. As a result of this, various forms of heat are transported upwards to the right and to the left of the further plateau. The component that projects downwards in the center may be formed by a plate that may be solid or double-walled. In a favorable embodiment, a double-walled bottom has a triangular shape viewed in said cross-section. Good results are also obtainable with a form that somewhat deviates from the triangular shape. Furthermore, a - preferably double-walled - downwardly protruding shape may be advantageously used with another geometry in said cross-section such as a round or oval shape.

In a further favorable embodiment, the heat distribution means comprise an insulated design of the side walls of the device, while the combustion gases are guided mainly on either side of the further plateau towards the outlet, which is situated close to and below the first plateau. Such an insulated design preferably comprises that side walls of the device are of a double-walled construction at least at the level of the upper portion of the combustion chamber and all components of the device located above said upper portion. More heat is thus available for heating food on both plateaus.

The heat distribution means furthermore advantageously comprise guide strips that extend in the path of the combustion gases on either side of the further plateau. The combustion gases and the heat contained therein can thus be guided, for example, from the front to the rear, but also a return path or a deceleration are among the possibilities. The heat distribution can be optimized in this manner.

In a further embodiment, the heat distribution means comprise a cover that can be placed over the plateau. The temperature of the plateau can be raised by means of this.

In a favorable modification, both the plateau and the further plateau comprise a closed plate. This may be a metal plate, such as a cast iron or stainless steel plate, but preferably a slab of (natural) stone is used. The plateau is then preferably made of a natural stone such as granite or serpentino, whereas the further plateau comprises a ceramic material.

Both the shape and the geometry of the device may be varied. Preferably it has a substantially rectangular shape when viewed in projection, wherein the air inlet and the outlet for the combustion gases lie at mutually opposed sides of the device, preferably at the front and at the rear of the device, respectively.

The device may advantageously be made mobile in that it is provided with two or more wheels so as to make it easier to move.

According to the invention, a method for the outdoor preparation of food by heating, which method utilizes a device which is provided with a movable frame with a combustion chamber arranged therein, which chamber is provided with an air inlet and is connected to an outlet for combustion gases adjacent an upper side of the device, and which device is provided with a plateau which is located above the combustion chamber and on which food to be prepared can be placed, is characterized in that the device is provided with a further plateau on which further food to be prepared can be placed and which is located between the combustion chamber and the plateau, and in that the device is provided with heat distribution means for distributing the heat generated in the combustion chamber over the plateau and the further plateau and in that the heat distribution means comprise that the further plateau forms part of a bottom of a drawer-type body of which an open front adjoins a portion of a front face of the device that can be opened, of which two side faces are at some distance from the side walls, and of which a rear face is at some distance from the rear wall of the device, wherein the side faces, the rear face, as well as the front face are bounded on the upper side by the plateau. The invention may thus also be advantageously used in the catering and/or restaurant business. A device according to the invention may advantageously be used for this. The device may be increased in size especially for such applications (in particular made wider). The device may advantageously be made of a double construction within one frame. This not only provides the capacity increase desired for said applications, it also provides a greater freedom, for example for placing a barbecue grill next to a stone plate at the level of the higher plateau. A cover over these plates may also be of a double design then.

### SHORT DESCRIPTION OF THE FIGURES

These and other aspects of the invention will become apparent from and be explained in more detail with reference to the embodiments to be described below. Reference is made to the drawings, in which:
Fig. 1 is a diagrammatic perspective view of an embodiment of the device according to the invention, showing in particular the exterior thereof, and
Fig. 2 is a diagrammatic perspective view, partly broken away, of the device of Fig. 1, showing in particular the interior thereof.

### DETAILED DESCRIPTION OF THE PREFERRED EMBODIMENTS

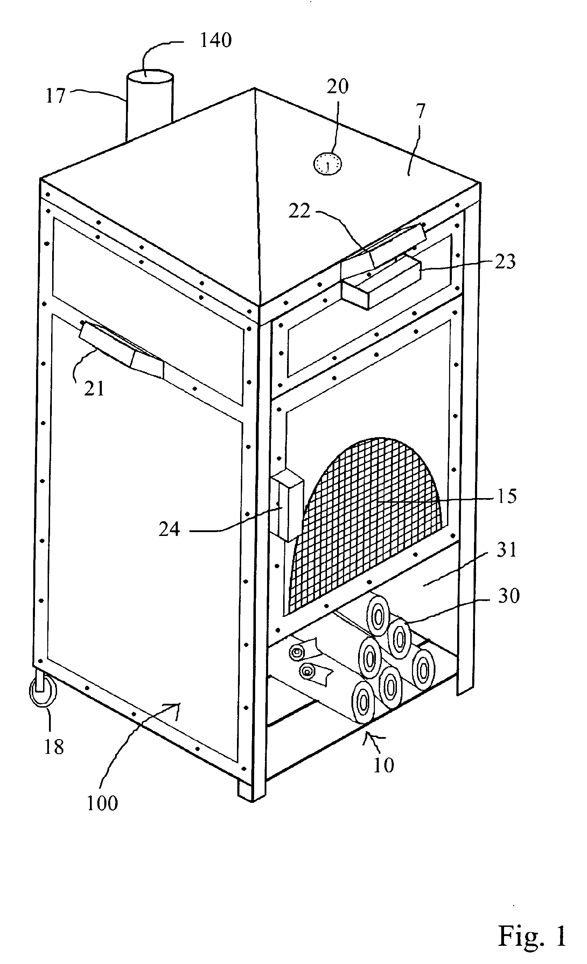

Fig. 1 is a diagrammatic perspective view of an embodiment of the device according to the invention, showing in particular the exterior thereof. This device 10 comprises a frame 100 which in this case is provided with steel side walls screwed thereto and having a thickness of approximately 1.5 mm. On top of the device 10 there is a cover 7 that is provided with a temperature indicator 20 and a handle 22, at the approximate level of which below the cover we find the plateau for the preparation of food. Behind a part of the device 10 that can be closed off with a flap 23 there is an oven space on whose bottom the further plateau for the preparation of further food is formed. A part of the device located underneath the latter forms a combustion chamber that can be closed off by means of a plate fitted with a handle 24. An air inlet 15 in the form of a perforated plate is present therein. Behind the latter plate there is a similar plate accommodated in a guide rail such that it can be shifted to and fro therein from the exterior by means of a pin in a slot (not shown), so that the air supply 15 can be controlled between a maximum value and zero. The quantity of heat and the heat distribution can thus be controlled to a certain extent in this manner. To control the temperature of the upper food plateau the cover 7 can be set with an opening (of increasing width). The combustion gases 40 leave the device 10 via an exhaust pipe 17. Under the combustion chamber there is a space 31 for storing spare fuel 30, for example wood. The device 10 is provided at its lower side with two or more wheels so that it can be easily moved. To facilitate this moving, the device 10 may be further provided with one or more handles 21 fitted to the sides or rear of the device 10. The device 10 in this example is approximately 50 cm wide, 50 cm deep, and 100 to 120 cm high, the plateau being present at the former height and the cover 7 at the latter.

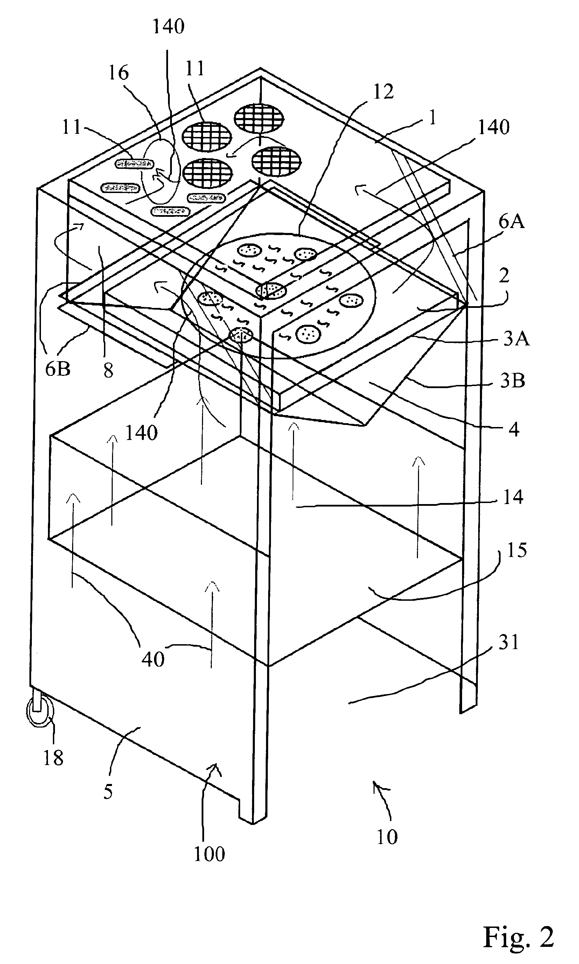

Fig. 2 is a diagrammatic perspective view, partly broken away, of the device of Fig. 1, showing in particular the interior thereof. The two plateaus 1, 2 for the preparation of food 11, 12 are particularly clearly visible herein. The food 11 comprises hamburgers and sausages here, whereas the food 12 comprises a pizza. The two plateaus 1, 2 are formed from stone slabs of a few centimeters thickness. The plateau 1 is made, for example, of granite or serpentino, and the further plateau 2 comprises a ceramic material. The device 10 is provided with various means for distributing the heat generated in the combustion chamber 14.

Said means comprise that the further plateau forms part of a bottom of a drawer-type body 8 whose open front adjoins a portion of a front face of the device 10 that can be opened, while two side faces of said body are at some distance from the side walls 5 and a rear face thereof is at some distance from the rear wall of the device 10. Both the side faces and the rear and front faces of the drawer-type body 8 are bounded at the upper side by the plateau 1. In this example, the heat distribution means further comprise that the bottom 3 of the further plateau is double-walled. The walls 3A, 3B of the bottom 3 here have a triangular cross-section (height approximately 10 to 15 cm), i.e. viewed perpendicularly to the front (and rear) wall of the device 10. As a result, the flames present in the combustion chamber and the air sucked in through the air inlet 14 are guided to the left and to the right. Air is also admitted on the left and on the right of the combustion chamber 14, and the admitted air and subsequently the combustion gases have been indicated here with thinner arrows 40.

Thus it is apparent that (additional) air 40 is sucked on left and right of the oven chamber 8. This air will rise together with the combustion gases 140 owing to convection, whereby the oven chamber 8 is optimally heated. The side walls 5 of the device 10 and the rear wall thereof have been made double-walled for this purpose at least over the relevant portion of the device 10, i.e. from approximately halfway the combustion chamber up to the plateau 1. This keeps the outside of the device 10 comparatively cool while also increasing the amount of heat available for heating the plateaus 1, 2. The combustion gases 140 are finally discharged at the rear of the device 10 through an outlet 16 to the exhaust pipe (not shown) mentioned above. Guide strips 6A, 6B have been provided in the path of the combustion gases 140 in order to optimize the heat transfer from the combustion gases 140 to the oven chamber 8 and thus to the plateaus 1, 2. Strips 6A guide the combustion gases 140 from the front to the rear and from below to above, while strips 6B, which are present at the rear portions of the sides of the oven chamber 8 and at the rear thereof, slow down the combustion gases 140 and/or guide them from the rear to the front. The strips 6A, 6B have a fixed shape and position in the example given here. Said strips may be made adjustable in order to render the heat distribution in the device 10 more controllable, in which case said shape and position can be modified from the outside.

The temperature of the upper plateau I in the device 10 according to this embodiment lies between 100°C and 200 °C, which makes it suitable for the preparation of food 11 such as fish, meat, vegetables, and pancakes. The temperature at the further plateau 2 lies between 200°C and 300 °C, so that it is suitable for the preparation of food comprising dough products such as pizzas.

The invention has been described above with reference to preferred embodiments thereof. Those skilled in the art will realize that many modifications and changes may be applied thereto without departing from the scope of the accompanying claims. Such preferred embodiments should accordingly be regarded as illustrative rather than limitative, and no limitations should be inferred therefrom other than those expressly stated in the accompanying claims.

Thus it is noted that the plateau may comprise not only a closed plate or a barbecue grill, but also a plate provided with one or several (larger) openings in which, for example, a wok-type frying pan can be placed, for example for the preparation of vegetables.

It is finally noted that the device is also suitable for use as a terrace heater. This may take place already during barbecuing, in which case the additional heat losses involved may be compensated by a greater fuel consumption. It may also take place while the device is not in use as a barbecue. In that case the door of the air inlet may be left open, so that an open fireplace effect is created.

## Claims

1. A device (10) for the outdoor preparation of food (11, 12) by heating, comprising a movable frame (100) with a combustion chamber (14) arranged therein, which chamber is provided with an air inlet (15) and is connected to an outlet (16) for combustion gases adjacent an upper side of the device (10), and comprising a plateau (1) which is located above the combustion chamber (14) and on which food (11) to be prepared can be placed, the device (10) comprising a further plateau (2) on which further food (12) to be prepared can be placed and which is located between the combustion chamber (14) and the plateau (1), the device (10) being provided with heat distribution means (3, 4, 5, 6, 7, 8) for distributing the heat generated in the combustion chamber (14) over the plateau (1) and the further plateau (2) and the heat distribution means comprising that the further plateau (2) forms part of a bottom of a drawer-type body (8) of which an open front adjoins a portion of a front face of the device that can be opened, of which two side faces are at some distance from the side walls (5), and of which a rear face is at some distance from the rear wall of the device, **characterized in that** the side faces, the rear face, as well as the front face of the drawer-type body (8) are bounded on the upper side by the plateau (1).

2. A device as claimed in claim 1, **characterized in that** the heat distribution means comprise that the bottom (3) of the further plateau (2) is double-walled (3A, 3B).

3. A device as claimed in claim 2, **characterized in that** the bottom (3) has a shape (4) that projects in its center towards the combustion chamber (14) when viewed in a cross-section taken perpendicularly to a projected direction from the air inlet (15) to the outlet (16) for the combustion gases.

4. A device as claimed in claim 3, **characterized in that** the bottom (3) has a triangular shape (4) when viewed in said cross-section.

5. A device as claimed in any one of the preceding claims, **characterized in that** the heat distribution means comprise an insulated design of the side walls (5) of the device (10), while the combustion gases are guided mainly on either side of the further plateau (2) towards the outlet (16), which is situated close to and below the first plateau (1).

6. A device as claimed in claim 5, **characterized in that** the heat distribution means comprise guide strips (6A, 6B) that extend in the path of the combustion gases on either side of the further plateau (2).

7. A device as claimed in any one of the preceding claims, **characterized in that** the heat distribution means comprise a cover (7) that can be placed over the plateau (1).

8. A device as claimed in any one of the preceding claims, **characterized in that** the plateau (1) and the further plateau (2) each comprise a closed plate.

9. A device as claimed in claim 8, **characterized in that** the plateau (1) comprises a slab of natural stone and the further plateau (2) comprises a ceramic plate.

10. A device as claimed in any one of the preceding claims, **characterized in that** it has a substantially rectangular shape when viewed in projection, wherein the air inlet (15) and the outlet (16) for the combustion gases lie at mutually opposed sides of the device.

11. A device as claimed in any one of the preceding claims, **characterized in that** the temperature adjacent the plateau (1) lies between 100 °C and 200 °C during operation, so that this plateau is suitable for the preparation of food such as fish, meat, vegetables, and pancakes.

12. A device as claimed in any one of the preceding claims, **characterized in that** the temperature adjacent the further plateau (2) lies between 200 °C and 300 °C during operation, so that this plateau is suitable for the preparation of food that contains dough products, such as pizzas.

13. A device as claimed in any one of the preceding claims, **characterized in that** the device is provided with two or more wheels (8).

14. A method for the outdoor preparation of food (11, 12) by heating, which method utilizes a device (10) which is provided with a movable frame (100) with a combustion chamber (14) arranged therein, which chamber is provided with an air inlet (15) and is connected to an outlet (16) for combustion gases adjacent an upper side of the device (10), and which device (10) is provided with a plateau (1) which is located above the combustion chamber (14) and on which food (11) to be prepared can be placed, **characterized in that** the device (10) is provided with a further plateau (2) on which further food (12) to be prepared can be placed and which is located between the combustion chamber (14) and the plateau (1), and **in that** the device (10) is provided with heat distribution means (3, 4, 5, 6, 7, 8) for distributing the heat generated in the combustion chamber (14) over the plateau (1) and the further plateau (2) and **in that** the heat distribution means comprise that the further plateau (2) forms part of a bottom of a drawer-type body (8) of which an open front adjoins a portion of a front face of the device that can be opened, of which two side faces are at some distance from the side walls (5), and of which a rear face is at some distance from the rear wall of the device, wherein the side faces, the rear face, as well as the front face of the drawer-type body (8) are bounded on the upper side by the plateau (1).

## Patentansprüche

1. Vorrichtung (10) zum Bereiten von Nahrungsmitteln (11, 12) im Freien durch Erhitzen, umfassend ein bewegliches Gestell (100) mit einer darin angeordneten Verbrennungskammer (14), wobei die Kammer mit einem Lufteinlass (15) versehen ist und mit einem Auslass (16) für Verbrennungsgase einer Oberseite der Vorrichtung (10) benachbart verbunden ist, und umfassend eine Hochfläche (1), die sich über der Verbrennungskammer (14) befindet und auf der Nahrungsmittel (11), die bereitet werden sollen, angeordnet sein können, die Vorrichtung (10) umfassend eine weitere Hochfläche (2), auf der weitere Nahrungsmittel (12), die bereitet werden sollen, angeordnet sein können, und die sich zwischen der Verbrennungskammer (14) und der Hochfläche (1) befindet, wobei die Vorrichtung (10) mit Wärmeverteilungsmitteln (3, 4, 5, 6, 7, 8) zum Verteilen der Wärme, die in der Verbrennungskammer (14) erzeugt ist, über die Hochfläche (1) und die weitere Hochfläche (2) versehen ist, und die Wärmeverteilungsmittel umfassen, dass die weitere Hochfläche (2) ein Teil einer Unterseite eines schubladenähnlichen Körpers (8) ausbildet, von dem eine offene Vorderseite an einen Abschnitt einer Vorderfläche der Vorrichtung angrenzt, die geöffnet werden kann, von dem sich zwei Seitenflächen in einigem Abstand von den Seitenwänden (5) befinden, und von dem sich eine Rückseitenfläche in einigem Abstand von der Rückwand der Vorrichtung befindet, **dadurch gekennzeichnet, dass** die Seitenflächen, die Rückfläche sowie die Vorderfläche des schubladenähnlichen Körpers (8) auf der Oberseite durch die Hochfläche (1) begrenzt sind.

2. Vorrichtung nach Anspruch 1, **dadurch gekennzeichnet, dass** die Wärmeverteilungsmittel umfassen, dass der Boden (3) der weiteren Hochfläche (2) zweiwandig (3A, 3B) ist.

3. Vorrichtung nach Anspruch 2, **dadurch gekennzeichnet, dass** der Boden (3) eine Form (4) aufweist, die bei Betrachtung in einem Querschnitt senkrecht zu einer Vorstandsrichtung von dem Lufteinlass (15) zum Auslass (16) für die Verbrennungsgase an ihrer Mitte zur Verbrennungskammer (14) hin vorsteht.

4. Vorrichtung nach Anspruch 3, **dadurch gekennzeichnet, dass** der Boden (3) bei Betrachtung in dem Querschnitt eine dreieckige Form (4) aufweist.

5. Vorrichtung nach einem der vorhergehenden Ansprüche, **dadurch gekennzeichnet, dass** die Wärmeverteilungsmittel eine isolierte Gestaltung der Seitenwände (5) der Vorrichtung (10) umfassen, während die Verbrennungsgase hauptsächlich auf jeder Seite der weiteren Hochfläche (2) zu dem Auslass (16) hin geführt sind, der sich in der Nähe und unter der ersten Hochfläche (1) befindet.

6. Vorrichtung nach Anspruch 5, **dadurch gekennzeichnet, dass** die Wärmeverteilungsmittel Führungsstreifen (6A, 6B) umfassen, die sich in den Weg der Verbrennungsgase auf jeder Seite der weiteren Hochfläche (2) erstrecken.

7. Vorrichtung nach einem der vorhergehenden Ansprüche, **dadurch gekennzeichnet, dass** die Wärmeverteilungsmittel eine Abdeckung (7) umfassen, die über der Hochfläche (1) angeordnet sein kann.

8. Vorrichtung nach einem der vorhergehenden Ansprüche, **dadurch gekennzeichnet, dass** die Hochfläche (1) und die weitere Hochfläche (2) jede eine geschlossene Platte umfassen.

9. Vorrichtung nach Anspruch 8, **dadurch gekennzeichnet, dass** die Hochfläche (1) eine Tafel aus Naturstein umfasst und die weitere Hochfläche (2) eine Keramikplatte ist.

10. Vorrichtung nach einem der vorhergehenden Ansprüche, **dadurch gekennzeichnet, dass** sie bei Betrachtung in Projektion eine im Wesentlichen rechteckige Form aufweist, wobei der Lufteinlass (15) und der Auslass (16) für die Verbrennungsgase auf einander gegenüberliegenden Seiten der Vorrichtung liegen.

11. Vorrichtung nach einem der vorhergehenden Ansprüche, **dadurch gekennzeichnet, dass** die Temperatur benachbart der Hochfläche (1) im Betrieb zwischen 100 °C und 200 °C liegt, sodass diese Hochfläche für die Bereitung von Nahrungsmitteln, wie etwa Fisch, Fleisch, Gemüse und Pfannkuchen, geeignet ist.

12. Vorrichtung nach einem der vorhergehenden Ansprüche, **dadurch gekennzeichnet, dass** die Temperatur benachbart der weiteren Hochfläche (2) im Betrieb zwischen 200 °C und 300 °C liegt, sodass diese Hochfläche für die Bereitung von Nahrungsmitteln, die Teigprodukte enthalten, wie etwa Pizzas, geeignet ist.

13. Vorrichtung nach einem der vorhergehenden Ansprüche, **dadurch gekennzeichnet, dass** die Vorrichtung mit zwei oder mehr Rädern (8) versehen ist.

14. Verfahren zum Bereiten von Nahrungsmitteln (11, 12) im Freien durch Erhitzen, wobei das Verfahren eine Vorrichtung (10) nutzt, die mit einem beweglichen Gestell (100) mit einer darin angeordneten Verbrennungskammer (14) versehen ist, wobei die Kammer mit einem Lufteinlass (15) versehen ist und mit einem Auslass (16) für Verbrennungsgase einer Oberseite der Vorrichtung (10) benachbart verbunden ist, und wobei die Vorrichtung (10) mit einer Hochfläche (1) versehen ist, die sich über der Verbrennungskammer (14) befindet und auf der Nahrungsmittel (11), die bereitet werden sollen, angeordnet sein können, **dadurch gekennzeichnet, dass** die Vorrichtung (10) mit einer weiteren Hochfläche (2) versehen ist, auf der weitere Nahrungsmittel (12), die bereitet werden sollen, angeordnet sein können, und die sich zwischen der Verbrennungskammer (14) und der Hochfläche (1) befindet, und dass die Vorrichtung (10) mit Wärmeverteilungsmitteln (3, 4, 5, 6, 7, 8) zum Verteilen der Wärme, die in der Verbrennungskammer (14) erzeugt ist, über die Hochfläche (1) und die weitere Hochfläche (2) versehen ist, und dass die Wärmeverteilungsmittel umfassen, dass die weitere Hochfläche (2) ein Teil einer Unterseite eines schubladenähnlichen Körpers (8) ausbildet, von dem eine offene Vorderseite an einen Abschnitt einer Vorderfläche der Vorrichtung angrenzt, die geöffnet werden kann, von dem sich zwei Seitenflächen in einigem Abstand von den Seitenwänden (5) befinden, und von dem sich eine Rückseitenfläche in einigem Abstand von der Rückwand der Vorrichtung befindet, wobei die Seitenflächen, die Rückfläche sowie die Vorderfläche des schubladenähnlichen Körpers (8) auf der Oberseite durch die Hochfläche (1) begrenzt sind.

## Revendications

1. Dispositif (10) pour la préparation de nourriture (11, 12) en extérieur, par réchauffement, comprenant un cadre mobile (100) avec une chambre de combustion (14) arrangée dans celui-ci, laquelle chambre est pourvue d'une entrée d'air (15) et est reliée à une sortie (16) de gaz de combustion adjacente à un côté supérieur du dispositif (10), et comprenant un plateau (1) situé au-dessus de la chambre de combustion (14), sur lequel la nourriture à préparer (11) peut être disposée, le dispositif (10) comprenant un autre plateau (2) sur lequel une autre nourriture (12) à préparer peut être disposée et qui est situé entre la chambre de combustion (14) et le plateau (1), le dispositif étant pourvu de moyens de distribution (3, 4, 5, 6, 7, 8) de chaleur destinés à répartir la chaleur générée dans la chambre de combustion (14) au-dessus du plateau (1) et de l'autre plateau (2), et les moyens de distribution de chaleur impliquant que l'autre plateau (2) forme une partie d'un fond d'un corps du genre tiroir (8), dont l'avant ouvert avoisine une portion d'une face avant du dispositif, qui peut être ouverte, dont deux faces latérales se trouvent à une certaine distance des parois latérales (5), et dont une face arrière se trouve à une certaine distance de la paroi arrière du dispositif, **caractérisé en ce que** les faces latérales, la face arrière et la face avant du corps du genre tiroir (8) sont reliées du côté supérieur par le plateau (1).

2. Dispositif selon la revendication 1, **caractérisé en ce que** les moyens de distribution de chaleur impliquent que le fond (3) de l'autre plateau (2) comporte une double-paroi (3A, 3B).

3. Dispositif selon la revendication 2, **caractérisé en ce que** le fond (3) présente une forme (4) faisant saillie en son centre vers la chambre de combustion (14), vu dans une section transversale perpendiculairement à une direction de saillie à partir de l'entrée d'air (15) jusqu'à la sortie (16) pour les gaz de combustion.

4. Dispositif selon la revendication 3, **caractérisé en ce que** le fond (3) présente une forme triangulaire (4), vu dans ladite section transversale.

5. Dispositif selon l'une quelconque des revendications précédentes, **caractérisé en ce que** les moyens de distribution de chaleur comprennent un design isolé des parois latérales (5) du dispositif (10), tandis que les gaz de combustion sont guidés principalement de chaque côté de l'autre plateau (2), vers la sortie (16), qui se trouve à proximité de et en-dessous du premier plateau (1).

6. Dispositif selon la revendication 5, **caractérisé en ce que** les moyens de distribution de chaleur comprennent des bandes de guidage (6A, 6B) qui s'étendent sur le trajet des gaz de combustion, de chaque côté de l'autre plateau (2).

7. Dispositif selon l'une quelconque des revendications précédentes, **caractérisé en ce que** les moyens de distribution de chaleur comprennent un couvercle (7) apte à être placé par-dessus le plateau (1).

8. Dispositif selon l'une quelconque des revendications précédentes, **caractérisé en ce que** le plateau (1) et l'autre plateau (2) comprennent chaque une plaque fermée.

9. Dispositif selon la revendication 8, **caractérisé en ce que** le plateau (1) comprend une dalle en pierre naturelle, et l'autre plateau (2) comprend une plaque en céramique.

10. Dispositif selon l'une quelconque des revendications précédentes, **caractérisé en ce qu'**il présente une forme substantiellement rectangulaire, vu dans sa projection, où l'entrée d'air (15) et la sortie (16) destinée aux gaz de combustion se trouve sur des côtés mutuellement opposés du dispositif.

11. Dispositif selon l'une quelconque des revendications précédentes, **caractérisé en ce que** la température à proximité du plateau (1) varie entre 100°C et 200°C pendant le fonctionnement, de sorte que ce plateau est approprié pour la préparation de nourriture telle que le poisson, la viande, les légumes et les crêpes.

12. Dispositif selon l'une quelconque des revendications précédentes, **caractérisé en ce que** la température à proximité de l'autre plateau (2) varie entre 200°C et 300°C pendant le fonctionnement, de sorte que ce plateau est approprié pour la préparation de nourriture contenant de la pâte, comme les pizzas.

13. Dispositif selon l'une quelconque des revendications précédentes, **caractérisé en ce que** le dispositif est pourvu d'une ou de plusieurs roues (8).

14. Méthode pour la préparation de nourriture (11, 12) en extérieur, par réchauffement, laquelle méthode emploie un dispositif (10) pourvu d'un cadre mobile (100), avec une chambre de combustion (14) arrangée dans celui-ci, laquelle chambre est pourvue d'une entrée d'air (15) et est reliée à une sortie (16) de gaz de combustion adjacente à un côté supérieur du dispositif (10), et le dispositif (10) comprenant un plateau (1) situé au-dessus de la chambre de combustion (14), sur lequel la nourriture à préparer (11) peut être disposée, **caractérisée en ce que** le dispositif (10) comprend un autre plateau (2), sur lequel une autre nourriture (12) à préparer peut être disposée et qui est situé entre la chambre de combustion (14) et le plateau (1), et **en ce que** le dispositif (10) est pourvu de moyens de distribution (3, 4, 5, 6, 7, 8) de chaleur destinés à répartir la chaleur générée dans la chambre de combustion (14) au-dessus du plateau (1) et de l'autre plateau (2), et **en ce que** les moyens de distribution de chaleur impliquent que l'autre plateau (2) forme une partie d'un fond d'un corps du genre tiroir (8), dont l'avant ouvert avoisine une portion d'une face avant du dispositif, qui peut être ouverte, dont deux faces latérales se trouvent à une certaine distance des parois latérales (5), et dont une face arrière se trouve à une certaine distance de la paroi arrière du dispositif, où les faces latérales, la face arrière et la face avant du corps du genre tiroir (8) sont reliées du côté supérieur par le plateau (1).
